Europäisches Patentamt

European Patent Office

Office européen des brevets

(19)

(11) Veröffentlichungsnummer : **0 113 801 B1**

(12) **EUROPÄISCHE PATENTSCHRIFT**

(45) Veröffentlichungstag der Patentschrift :
**30.12.86**

(21) Anmeldenummer : **83107211.1**

(22) Anmeldetag : **22.07.83**

(51) Int. Cl.⁴ : **C 08 G 63/42, C 08 G 63/20, C 08 G 63/48, C 08 G 63/58, C 08 G 63/66, C 09 D 3/64**

(54) Alkydharze, enthaltend funktionelle Epoxide.

(30) Priorität : **16.12.82 DE 3246615**

(43) Veröffentlichungstag der Anmeldung :
**25.07.84 Patentblatt 84/30**

(45) Bekanntmachung des Hinweises auf die Patenterteilung : **30.12.86 Patentblatt 86/52**

(84) Benannte Vertragsstaaten :
**AT CH DE GB LI**

(56) Entgegenhaltungen :
**EP-A- 0 060 505**
**DE-A- 2 842 919**
**GB-A- 987 191**
**US-A- 3 196 117**
**US-A- 3 806 479**
**Die Akte enthält technische Angaben, die nach dem Eingang der Anmeldung eingereicht wurden und die nicht in dieser Patentschrift enthalten sind.**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Wilk, Hans-Christoph, Dr.**
**An der Obererft 94**
**D-4040 Neuss (DE)**
Erfinder : **Meffert, Alfred, Dr.**
**Marie-Curie-Strasse 10**
**D-4019 Monheim (DE)**
Erfinder : **Wegemund, Bernd, Dr.**
**Händelweg 3**
**D-5657 Haan (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung liegt auf dem Gebiet der Alkydharze. Sie betrifft Harze, die mit epoxydierten Fettalkoholen als langkettige Epoxidkomponente modifiziert sind. Die Harze eignen sich insbesondere zur Verwendung in Wasserlacken.

Es ist wohl bekannt, in Alkydharzen Fettsäuren durch langkettige Epoxide zu ersetzen, welche über die Carbonsäuren eingebaut werden. So werden in der der deutschen Offenlegungsschrift 26 20 726 Alkydharze beschrieben, die als kennzeichnenden Bestandteil langkettige Epoxyalkane mit innenständiger Epoxidgruppe enthalten. Die Harze sind zur Verwendung in Lösungsmittellacken, nicht jedoch in Wasserlacken geeignet. Als aufgabengemäßer Vorteil wird die Vergrößerung der Hydrolyse-Beständigkeit angegeben.

Auch auf dem Gebiet der Wasserlacke sind ölfreie Alkydharze bekannt. So werden in der deutschen Offenlegungsschrift 28 15 096 Harze beschrieben, welche eine Säurezahl zwischen 25 und 80 und eine OH-Zahl bis etwa 180 mg KOH/g aufweisen. Als Vorteile werden bessere Wetterfestigkeit und geringere Vergilbung herausgestellt.

Die Verwendbarkeit dieser Harze wird jedoch dadurch eingeschränkt, daß sich aus den so erhaltenen Wasserlacken nur Filme mit mäßiger Härte herstellen lassen. Trotz günstigen Bewitterungsverhaltens sind derartige Lacke für viele Lackierungen im Außenbereich, etwa die Automobildecklackierung, wenig geeignet.

Bereits bekannt sind Alkydharze, die als Kondensationskomponente epoxydierte Triglyceride oder epoxydierte Fettsäureester enthalten. So werden in der EP-A 0 060 505 Harze beschrieben, die Monoepoxidverbindungen als Modifizierungsmittel enthalten und die bis zu Säurezahlen um 50 aufgesäuert werden. Die hohe Säurezahl und die Einbindung der Rohstoffe nur über eine funktionelle Gruppe bewirken jedoch ungünstige Langzeitbewitterungseigenschaften. Dies gilt auch für die in der US-Patentschrift 3 196 117 beschriebenen Harze mit einer Säurezahl zwischen 40 und 120, die als Modifizierungsmittel epoxydierte Fettsäureester enthalten, wobei auch epoxydierte Triglyceride eingesetzt werden und die eine Restepoxidzahl aufweisen.

Bekannt sind schließlich aus der US-Patentschrift 3 806 479 Full Solid Polyester mit OH-Gruppen und eine Säurezahl bis 18. Derartige Polyester werden hergestellt, indem ein hydroxylgruppenhaltiger Ester mit 20-60 Gew.-% eines epoxydierten Triglycerids oder eines epoxydierten Fettsäureesters umgesetzt wird. Die so hergestellten Polyole sind als Polyurethanrohstoffe verwendbar. Auf eine mögliche Eignung für Wasserlacke findet sich kein Hinweis.

Weiterhin besteht ein Bedarf nach Harzen für Wasserlacke mit möglichst geringer Säurezahl — etwa < 35 oder < 25 mg KOH/g, da diese geringere Mengen Amin zur Neutralisation benötigen. Bei derartig geringen Säurezahlen sind jedoch die vorbeschriebenen Harze nicht zu homogenen, klaren, wässrigen Zubereitungen konfektionierbar.

Es bestand daher ein Bedürfnis Alkydharze zu schaffen, die sich zu harten und flexiblen Lacken einbrennen lassen und ausgezeichnetes Bewitterungsverhalten, insbesondere hoher Wasserfestigkeit im Schwitzwassertest zeigen.

Es ist somit Aufgabe der Erfindung, auf Basis oleochemischer (nachwachsender) Rohstoffe Alkydharze bereitzustellen, die zu Lackfilmen verarbeitet werden können, welche verbesserte Bewitterungseigenschaften, insbesondere verbesserte Schwitzwasserfestigkeit und hohe Härte aufweisen. Ein weitere Aufgabe ist es, Alkydharze mit den genannten Eigenschaften zur Verwendung in Wasserlacken zu schaffen. Insbesondere ist es Aufgabe der Erfindung, Alkydharze mit Säurezahl zwischen 5 und 30 mg KOH/g bereitzustellen, die sich ohne zwingende Verwendung nachteiliger Konfektionierungsmittel, wie flüchtiger, organischer Lösungsmittel, flüchtiger Amine oder beim Einbrennen beständiger Emulgatoren zu Wasserlacken verarbeiten lassen und nach dem Einbrennen Lackfilme mit hoher Härte und verbesserter Beständigkeit im Schwitzwassertest ergeben.

Gegenstand der Erfindung sind demzufolge Alkydharze, hergestellt durch Kondensation von mehrfunktionellen Carbonsäuren und/oder deren reaktiven Derivaten und gewünschtenfalls Fettsäuren mit Hydroxylverbindungen, dadurch gekennzeichnet, daß als langkettige Alkydharz modifizierende Reaktionskomponente epoxydierte, ungesättigte Fettalkohole mit 16-22 C-Atomen einkondensiert werden und die Säurezahl zwischen 5 und 30 mg KOH/g beträgt.

Die genannten Alkydharz modifizierenden langkettigen Reaktionskomponente unterscheiden sich von den zum Stand der Technik gehörenden langkettigen Olefinoxiden dadurch, daß sie eine zusätzliche funktionelle Gruppe im Molekül enthalten und zwar eine Hydroxylgruppe. Zwar sind die der erfindungsgemäßen Lehre zugrunde liegenden chemischen Gesetzmäßigkeiten nicht vollständig bekannt, doch wird vermutet, daß über diese zusätzliche funktionelle Gruppe durch Veresterung oder Umesterung eine bessere Einbeziehung der langkettigen Modifizierungskomponente erreicht wird und dies zu den beobachteten verbesserten Eigenschaften, insbesondere der höheren Härte führt.

Die Erfindung betrifft somit Alkydharze, die als langkettige modifizierende Komponente epoxydierte Fettalkohole enthalten. Fettalkohole sind Mischungen primärer, monofunktioneller, geradkettiger Alkohole. Sie werden durch Reduktion der Ester natürlich vorkommender Fettsäuren unter Erhalt der Doppelbindung hergestellt. Lage und Anzahl der Doppelbindungen und damit der Epoxidgruppen richten

2

sich somit nach der Art des natürlichen Fettes, das dem Fettalkohol zugrunde liegt. Bevorzugte epoxydierte Fettalkohole sind solche, die reich an epoxydiertem Oleylalkohol sind. Diese sind zum Beispiel aus Fettalkoholgemischen mit Iod-Zahlen zwischen 90 und 95 herstellbar. Andererseits sind aber auch epoxydierte Fettalkohole von Bedeutung, die aus Fettalkoholen mit einem hohen Anteil an Linolyl- oder Linolenylalkohol hergestellt worden sind. Ein weiterer bevorzugter epoxydierter Fettalkohol ist der epoxydierte Erucaalkohol.

Die Umwandlung der Fettalkohole in die Epoxide kann mit einem Umsatz von wenigen Mol-Prozent bis nahe 100 % durchgeführt werden. Bevorzugte modifizierende Komponente für Alkydharze sind möglichst hoch epoxydierte Fettalkohole. Die Epoxidation selber wird nach bekannter Verfahren durchgeführt und ist nicht Gegenstand der Erfindung.

Zur Herstellung der erfindungsgemäßen Alkydharze werden die epoxydierten Fettalkohole mit üblichen Alkydharz-Rohstoffen nach bekannten Verfahren kondensiert. Übliche Alkydharz-Rohstoffe sind Diole, wie Ethylenglykol, Propylenglykol, Neopentylglykol ; Triole wie Trimethylolethan, Trimethylolpropan, Glycerin ; höherfunktionelle Hydroxyverbindungen wie Pentaerythrit oder Sorbit ; Monocarbonsäuren wie substituierte Benzoesäuren oder Fettsäuren ; Dicarbonsäuren wie Phthalsäure, deren Isomere, Adipinsäure oder Sebacinsäure und Tricarbonsäuren wie z. B. Trimellitsäure. Die Carbonsäuren können auch als Anhydride oder Ester eingesetzt werden.

Zum besseren Einbau der Modifizierungsmittel in die Harze werden oftmals Katalysatoren zugesetzt. Geeignete Katalysatoren sind z. B. p-Toluolsulfonsäure oder andere Säuren.

Die erfindungsgemäßen Alkydharze enthalten die Epoxidverbindungen in Mengen zwischen 5 und 50 Gew.-%, vorzugsweise zwischen 10 und 30 Gew.-%. Um für den jeweiligen Einsatzzweck die geeignete Menge zu ermitteln, kann der Fachmann von einem bekannten Alkydharz ausgehen und ein darin vorhandenes Modifizierungsmittel durch die erfindungsgemäß eingesetzten Epoxide ersetzen. So können in Alkydharzen auf Basis von Olefinoxiden diese molmässig oder auch gewichtsmäßig durch die epoxydierten Fettalkohole ersetzt werden. In Fettsäure modifizierten Alkydharzen können die Fettsäuren molmäßig ganz oder teilweise durch eine 1 : 1 — Mischung aus epoxydiertem Fettalkohol und einer Dicarbonsäure ersetzt werden. Es sei hier auf das allgemeine Fachwissen auf dem hier angesprochenen technischen Gebiet verwiesen, z. B. auf das Buch « Waterborne Coatings » von Charles R. Martens, Van Nostrand Reinhold C., New York, (1981). Werden in den erfindungsgemäßen Alkydharzen Fettsäuren mitverwendet, so beträgt ihre Menge weniger als 40 Gew.-%, bezogen auf Harz. Vorzugsweise werden weniger als 20 Gew.-% und insbesondere weniger als 5 Gew.-% Fettsäuren mitverwendet. Bei der Mitverwendung von Fettsäuren wird der Fachmann die verwendete Menge Epoxid umso geringer wählen, je höher der Fettsäureanteil ist. Die Art der Fettsäuren ist wenig kritisch. So können synthetische, verzweigte Fettsäuren, wie Isononansäure oder Isopalmitinsäure eingesetzt werden sowie fraktionierte oder nicht fraktionierte gesättigte oder ungesättigte Schnitte natürlicher Fettsäuren.

Bei der Herstellung der Alkydharze wird die Modifizierungskomponente stets in Gegenwart von carboxylgruppenhaltigen Verbindungen eingesetzt. Aufgrund der höheren Reaktivität der Epoxidgruppen gegenüber Carboxylgruppen im Vergleich zu Hydroxylgruppen wird vermutet, daß die Epoxidgruppen bei der Kondensation bevorzugt zu Estern und nicht zu Ethern reagieren.

Erfindungsgemäß wird die Kondensation so durchgeführt, daß Harze entstehen, die eine Säurezahl zwischen 5 und 30, vorzugsweise 15-25 und eine Hydroxylzahl > 200, vorzugsweise > 250 mg KOH/g aufweisen. Entsprechende Harze eignen sich zur Herstellung spezieller umweltfreundlicher Wasserlacken. Sie zeichnen sich dadurch aus, daß sie ohne Zuhilfenahme flüchtiger Amine, flüchtiger Hilfslösungsmittel oder solcher Emulgatoren, die beim Einbrennen beständig sind, zu Wasserlacken konfektionierbar sind.

Zur Neutralisation werden bevorzugt Aminoalkohole mit mehreren Hydroxylgruppen verwendet, die in den Mengen, die zur Neutralisierung derartig niedriger Säurezahlen verwendet werden, bei der Kondensation in den Lackfilm eingebaut werden können, ohne die technische Eigenschaften negativ zu beeinflussen.

Die besonders bevorzugten Alkydharze sind herstellbar, indem man in einer ersten Reaktionsstufe Hydroxylverbindungen, wie Ethylenglykol, Propylenglykol, Trimethylolpropan, Glycerin, Pentaerythrit oder Sorbit mit Dicarbonsäuren, wie Adipinsäure, Sebacinsäure und/oder Phthalsäure oder deren reaktive Derivate, gegebenenfalls auch Fettsäuren oder aber auch höherfunktionelle Carbonsäuren wie Trimellitsäure oder deren Anhydrid mit den Epoxiden bei Reaktionstemperaturen um 200° und gegebenenfalls am Beisein starker Säuren als Katalysatoren kondensiert bis die Säurezahl um 5 oder weniger beträgt. Es wird dann in einer zweiten Stufe mit einer Dicarbonsäure oder deren Anhydrid z. B. mit Phthalsäureanhydrid aufgesäuert und bei erhöhten Temperaturen, also über 200 °C, weiter kondensiert bis die Säurezahl in einem Bereich zwischen 40 und 120, vorzugsweise zwischen 60 und 100, liegt. In einer dritten Stufe werden dann durch Addition von Glycid 2,3-Dihydroxypropylgruppen eingeführt. Es wird soviel Glycid zugesetzt bis die Säurezahl in einem Bereich zwischen 5 und 30, vorzugsweise 15 bis 25 mg KOH/g beträgt.

Die so hergestellten Harze weisen OH-Zahlen > 200, vorzugsweise > 250 auf. Sie eignen sich für Herstellung besonders umweltfreundlicher Wasserlacke, wozu sie gegebenenfalls mit solchen Emulgatoren, die beim Einbrennen nicht beständig sind, in Wasser gelöst werden und mit Vernetzungsmitteln z. B. Melaminharzen versetzt werden. Die so hergestellten Wasserlacke sind für das Auge klar und vom Aussehen nicht von Lösungen zu unterscheiden. Sie geben beim Einbrennen praktisch keine die Umwelt negativ beeinflussenden flüchtigen Komponenten ab. In ihren technischen Eigenschaften zeichnen sie sich besonders durch hervorragende Bewitterungseigenschaften, hohe Schwitzwasserfestigkeit und große Flexibilität bei hoher Härte aus. So werden Pendelhärten nach König (DIN 53157) > 100 sec, bei Erichsentiefungen > 5,0 mm erreicht.

Die erfindungsgemäßen Alkydharze können zu Wasserlacken oder auch zu Lösungsmittellacken konfektioniert werden, welche nach herkömmlichen Methoden pigmentiert werden können. Als Lackbindemittel zeichnen sich Kombinationen der erfindungsgemäßen Alkydharze mit Aminoharzbildnern, wie Hexamethylether des Hexamethylolmelamins beziehungsweise den entsprechenden Kondensaten durch besonders gute Eigenschaften aus. Das Einbrennen der Lackfilme, die durch Aufbringen der Lösungen nach bekannten Methoden erhalten werden, erfolgt vorzugsweise nach einer Vortrocknung — bei Temperaturen zwischen etwa 120 und 180 °C in geeigneten Trockenöfen beziehungsweise Trockenkanälen.

Die Lacke können zum Überziehen der verschiedensten Materialien, wie Glas oder Metall, zum Beispiel Aluminium, Eisen, Stahl und dergleichen mehr verwendet werden.

Beispiele

In einer Standardapparatur werden kondensiert :

200 g Trimethylolpropan
220 g Neopentylglykol
200 g Adipinsäure
120 g Epoxid

Kondensationswasser wird durch Durchleiten von Stickstoff entfernt. Es werden ca. 44 ml Wasser abgespalten, die Säurezahl beträgt kleiner 5, Reaktionstemperatur 180-220 °C, Reaktionszeit 2 Stunden. Es wird sodann mit 400 g Phthalsäureanhydrid umgesetzt und 2 Stunden bei 220 °C weiterkondensiert. Hierbei werden ca. 27 ml Wasser abgespalten, Säurezahl 70-80.

Bei einer Temperatur von ca. 150 °C werden sodann 32 g des Addukts von 2 mol Glycid an 1 mol 2-Methyl-2-aminopropanol und 65 g Glycid zugegeben. Bei einer Reaktionstemperatur von 130 °C ist nach 1 Stunde eine Säurezahl von ca. 25 und eine OH-Zahl größer 200 mg KOH/g erreicht.

Zur Herstellung einer gut schüttbaren 85 %igen Harzlösung werden zugegeben : ca. 63 g des Addukts von 7,5 mol Glycid an Nonylphenol, ca. 122 g des Addukts von 2 mol Glycid an 2-Methyl-2-aminopropanol sowie ca. 235 g entsalztes Wasser.

Verwendete Epoxide :

Beispiel 1

Epoxydierter technischer Oleylalkohol, Ausgangsiodzahl 92-96 mg I/g ; 4,5-4,3 Gew.-% Epoxidsauerstoff, Iodzahl 2-5.

Beispiel 2

Epoxydierter technischer Oleylalkohol, Ausgangsiodzahl 110-130, 4,7-5,2 Gew.-% Epoxidsauerstoff, Iodzahl 9-11.

Beispiel 3

Epoxydierter Erucaalkohol, Ausgangsiodzahl 80-85, 3,8-4,2 Gew.-% Epoxidsauerstoff, Iodzahl 2-5

Beispiel 4

(Vergleichbeispiel)

Epoxydiertes Sojatriglycerid mit Methanol teilgeöffnet.
Ausgangsiodzahl 120-141.
Epoxidzahl vor Ringöffnung : 6,1-6,3
Epoxidzahl nach Ringöffnung : 3,1-3,3
(Gew.-% Epoxidsauerstoff)

Vergleichsbeispiel

In Anlehnung an DE-OS 28 15 096, Beispiel 2 wurde ein fettsäurefreies Alkydharz hergestellt. Hierzu

**0 113 801**

wurden in einer Standardapparatur unter Durchleiten von Stickstoff bei Temperaturen zwischen 160 °C und 220 °C während 4 Stunden kondensiert :

200 g $C_{12}/C_{14}$-1,2-Epoxyalkan
296 g Phthalsäureanhydrid
146 g Adipinsäure
208 g Neopentylglykol
134 g Trimethylolpropan

Es wurden 70 ml Reaktionswasser abgespalten. Die Säurezahl war kleiner 1,5. Sodann wurde mit 148 g Phthalsäureanhydrid bei 150 °C während einer Stunde umgesetzt und kondensiert bis eine Säurezahl 59,0 erreicht war.
Es wurden 982 g Harz enthalten, die mit

221 g Butylglykol
221 g Butanol
104 g Triethylamin und
443 g Wasser

zu einer 50 %igen lösungsmittelhaltigen Harzlösung konfektioniert wurden.

Herstellung von Überzügen
(Weißlack)

Im Dissolver wurde eine Malpaste hergestellt aus (Gew.-Teile) :

50 Teile Alkydharz, 85 %ig in Wasser
32 Teile deionisiertes Wasser
30 Teile Pigmentationshilfsmittel (9 Teile einer 30 %igen Säuregruppen tragenden, niedermolekularen Acrylatdispersion — Primal 194, Rohm & Haas Co — und 1 Teil 2-Methyl-2-aminopropanol-2-glycid, 75 Gew.-%ig in Wasser)
183 Teile Titandioxid (Chronos Titan CL 310)

Aufgelackt wurde mit :
309 Teilen Alkydharz, 85 %ig in Wasser
131 Teilen Melaminharz (Cymel 301 American Cyanamid Co)
265 Teilen deionisiertem Wasser

Es wurden 1000 Teile Weißlack mit einem Alkydharz zu Melaminharz Verhältnis 7 : 3, und einer Pigmentvolumenkonzentration von ca. 11 % erhalten.
Auch die Harzlösung nach Vergleichsbeispiel 2 wurde zu einem entsprechenden Lack verarbeitet.
Zur Prüfung der Filme wurden die Lacke auf Stahlbleche gespritzt und 15 Minuten bei 160 °C eingebrannt. Die Trockenfilmdicken betrugen 25-40 µm. Die erhaltenen Ergebnisse sind in der Tabelle aufgelistet.

(Siehe Tabelle Seite 6 f.)

5

Tabelle

Einbrennbedingungen 15 min 160 °C

| Beispiel Nr. | Pendelhärte härte (König) | Erichsen-tiefung | % Glanz 20° | % Glanz nach 600 Std. WOM - Test[**] | Schwitzkasten 40°C Std. blasenfrei |
|---|---|---|---|---|---|
| 1 | 188 | 5,4 | 83 | 77 | 120 |
| 2 | 187 | 5,4 | 86 | 76 | 120 |
| 3 | 108 | 9,2 | 88 | 79 | 216 |
| 4 [***] | 148 | 6,9 | 83 | 75 | 96 |
| V 1 | 28 | 10 | 78 | 73 | 48 |
| V 2 [*] | 61 | 10 | 60 | 56 | 72 |

[*] Lack VI 30 min 160 °C eingebrannt
[**] Weather-O-meter-Test
[***] Vergleich

**0 113 801**

**Patentansprüche** (für die Vertragsstaaten : CH, DE, GB, LI)

1. Alkydharze, hergestellt durch Kondensation von mehrfunktionellen Carbonsäuren und/oder deren reaktiven Derivaten und gewünschtenfalls Fettsäuren mit Hydroxylverbindungen, dadurch gekennzeichnet, daß als langkettige Alkydharz modifizierende Reaktionskomponente epoxydierte, ungesättigte Fettalkohole mit 16-22 C-Atomen einkondensiert werden und die Säurezahl zwischen 5 und 30 mg KOH/g beträgt.

2. Alkydharze nach Anspruch 1, dadurch gekennzeichnet, daß sie Fettsäuren in einer Menge von weniger als 40 Gew.-%, vorzugsweise weniger als 20 Gew.-% und insbesondere weniger als 5 Gew.-% einkondensiert enthalten.

3. Alkydharze, insbesondere für den Einsatz auf dem Gebiet der lösungsmittelfreien ofentrocknenden Wasserlacke, nach den Ansprüchen 1 und 2, dadurch gekennzeichnet, daß sie eine OH-Zahl über 200 mg KOH/g und eine Säurezahl zwischen 15 und weniger als 25 aufweisen.

4. Alkydharze nach Anspruch 3, dadurch gekennzeichnet, daß sie nach einem mehrstufigen Verfahren hergestellt worden sind, wobei zunächst bis zu einer Säurezahl zwischen etwa 40 und 120, vorzugsweise 60-100 kondensiert und anschließend durch Addition von Glycid eine Säurezahl unter 30, vorzugsweise unter 25 eingestellt worden ist.

5. Alkydharze nach den Ansprüchen 1-4, dadurch gekennzeichnet, daß sie die Epoxidverbindungen in einer Menge zwischen 5 und 50 Gew.-%, vorzugsweise 10 und 30 Gew.-% enthalten.

6. Verwendung der Alkydharze als Bindemittel für ofentrocknende Lacke.

**Patentansprüche** (für den Vertragsstaat AT)

1. Verfahren zur Herstellung von Alkydharzen durch Kondensation von mehrfunktionellen Carbonsäuren und/oder deren reaktiven Derivaten und gewünschtenfalls Fettsäuren mit Hydroxylverbindungen, dadurch gekennzeichnet, daß man als langkettige Alkydharz modifizierende Reaktionskomponente epoxydierte, ungesättigte Fettalkohole mit 16-22 C-Atomen einkondensiert und eine Säurezahl zwischen 5 und 30 mg KOH/g einstellt.

2. Verfahren nach Anspruch 1, dadurch gekennzeichnet, daß Fettsäuren in einer Menge von weniger als 40 Gew.-%, vorzugsweise weniger als 20 Gew.-% und insbesondere weniger als 5 Gew.-% einkondensiert werden.

3. Verfahren nach den Ansprüchen 1 und 2, dadurch gekennzeichnet, daß man eine OH-Zahl über 200 mg KOH/g und eine Säurezahl zwischen 15 und weniger als 25 einstellt.

4. Verfahren nach Anspruch 3, dadurch gekennzeichnet, daß nach einem mehrstufigen Verfahren gearbeitet wird, bei dem zunächst bis zu einer Säurezahl zwischen 40 und 120, vorzugsweise 60 bis 100, kondensiert wird und anschließend durch Addition von Glycid eine Säurezahl unter 30, vorzugsweise unter 25, eingestellt wird.

5. Verfahren nach den Ansprüchen 1 bis 4, dadurch gekennzeichnet, daß man die Epoxidverbindungen in einer Menge zwischen 5 und 50 Gew.-%, vorzugsweise 10 und 30 Gew.-%, einsetzt.

6. Verwendung der Alkydharze als Bindemittel für ofentrocknende Lacke.

**Claims** (for the Contracting States : CH, DE, GB, LI)

1. Alkyd resins prepared by condensation of polybasic carboxylic acids and/or reactive derivatives thereof and, if desired, fatty acids with hydroxyl compounds, characterized in that epoxidized, unsaturated $C_{16}$-$C_{22}$ fatty alcohols are co-condensed as long-chain alkyd-resin-modifying reaction component and the acid number is from 5 to 30 mg KOH/g.

2. Alkyd resins as claimed in Claim 1, characterized in that they contain co-condensed fatty acids in a quantity of less than 40 % by weight, preferably less than 20 % by weight and more preferably less than 5 % by weight.

3. Alkyd resins as claimed in Claims 1 and 2, more especially for use in solventless oven-drying aqueous lacquers, characterized in that they have an OH number above 200 mg KOH/g and an acid number of from 15 to less than 25.

4. Alkyd resins as claimed in Claim 3, characterized in that they have been prepared by a multistage process in which the resins are first condensed to an acid number of from about 40 to 120 and preferably from 60 to 100, after which an acid number below 30 and preferably below 25 is adjusted by addition of glycidol.

5. Alkyd resins as claimed in Claims 1 to 4, characterized in that they contain epoxide compounds in a quantity of from 5 to 50 % by weight and preferably in a quantity of from 10 to 30 % by weight.

6. The use of the alkyd resins as binders for ovendrying lacquers.

**Claims** (for the Contracting State AT)

7

**0 113 801**

1. A process for the production of alkyd resins by condensation of polybasic carboxylic acids and/or reactive derivatives thereof and, if desired, fatty acids with hydroxyl compounds, characterized in that epoxidized, unsaturated $C_{16}$-$C_{22}$ fatty alcohols are co-condensed as long-chain alkyd-resin-modifying reaction component and an acid number of from 5 to 30 mg KOH/g is adjusted.

2. A process as claimed in Claim 1, characterized in that fatty acids are co-condensed in a quantity of less than 40 % by weight, preferably less than 20 % by weight and more preferably less than 5 % by weight.

3. A process as claimed in Claims 1 and 2, characterized in that an OH number above 200 mg KOH/g and an acid number of from 15 to less than 25 are adjusted.

4. A process as claimed in Claim 3, characterized in that a multistage procedure is used in which the resins are first condensed to an acid number of from 40 to 120 and preferably of from 60 to 100, after which an acid number below 30 and preferably below 25 is adjusted by addition of glycidol.

5. A process as claimed in Claims 1 to 4, characterized in that the epoxide compounds are used in a quantity of from 5 to 50 % by weight and preferably in a quantity of from 10 to 30 % by weight.

6. The use of the alkyd resins as binders for oven-drying lacquers.


**Revendications** (pour les Etats contractants : CH, DE, GB, LI)

1. Résines alkydes, préparées par condensation d'acides carboxyliques polyfonctionnels et/ou de leurs dérivés réactifs et éventuellement d'acides gras avec des composés hydroxylés, caractérisées ou en ce qu'on incorpore par condensation comme composant de réaction modificateur de résines alkydes à longue chaîne des alcools gras insaturés époxydés ayant 16 à 22 atomes de carbone et en ce que l'indice d'acide s'élève à 5 à 30 mg de KOH/g.

2. Résines alkydes selon la revendication 1, caractérisées en ce qu'elles contiennent à l'état condensé des acides gras en une quantité inférieure à 40 % en poids, de préférence inférieure à 20 % en poids et en particulier inférieure à 5 % en poids.

3. Résines alkydes, en particulier à employer dans le domaine des vernis à l'eau à cuire au four, exempts de solvants, selon les revendications 1 et 2, caractérisées en ce qu'elles présentent un indice OH supérieur à 200 mg de KOH/g et un indice d'acide entre 15 et moins de 25.

4. Résines alkydes selon la revendication 3, caractérisées en ce qu'elles ont été préparées par un procédé en plusieurs stades, en condensant tout d'abord jusqu'à un indice d'acide entre environ 40 et 120, de préférence entre 60 et 100, puis en réglant un indice d'acide inférieur à 30, de préférence inférieur à 25, par une addition de glycidol.

5. Résines alkydes selon les revendications 1 à 4, caractérisées en ce qu'elles contiennent les composés époxy en une quantité comprise entre 5 et 50 % en poids, de préférence entre 10 et 30 % en poids.

6. Utilisation des résines alkydes comme liants pour vernis à cuire au four.


**Revendications** (pour l'Etat contractant AT)

1. Procédé de fabrication de résines alkydes par condensation d'acides carboxyliques polyfonctionnels et/ou de leurs dérivés réactifs et éventuellement d'acides gras avec des composés hydroxylés, caractérisé en ce qu'on introduit par condensation comme composant réactif modificateur de résines alkydes à longue chaîne des alcools gras insaturés époxydés ayant 16 à 22 atomes de carbone et en ce qu'on règle l'indice d'acide entre 5 et 30 mg de KOH/g.

2. Procédé selon la revendication 1, caractérisé en ce qu'on incorpore par condensation des acides gras en une quantité inférieure à 40 % en poids, de préférence inférieure à 20 % en poids et en particulier inférieure à 5 % en poids.

3. Procédé selon les revendications 1 et 2, caractérisé en ce qu'on règle un indice OH supérieur à 200 mg de KOH/g et un indice d'acide entre 15 et moins de 25.

4. Procédé selon la revendication 3, caractérisé en ce qu'on opère selon un procédé en plusieurs stades, dans lequel on condense jusqu'à un indice d'acide compris entre 40 et 120, de préférence entre 60 et 100, puis on règle un indice d'acide inférieur à 30, de préférence inférieur à 25, par une addition de glycidol.

5. Procédé selon les revendications 1 à 4, caractérisé en ce qu'on utilise les composés époxy en une quantité comprise entre 5 et 50 % en poids, de préférence entre 10 et 30 % en poids.

6. Utilisation des résines alkydes comme liants pour vernis à cuire au four.

8